# EUROPEAN PATENT APPLICATION

(11) **EP 4 844 534 A1**
(43) Date of publication of application: **25.11.2026**
(21) Application number: 26179816.9
(22) Date of filing: 20.05.2026
(51) Int. Cl.: G06F 1/26, G06F 1/28, G06F 1/30, G06F 1/324

(54) **PROGRAMMABLE POWER THROTTLE FOR TRANSITIONS IN POWER SUPPLY**

(30) Priority: 20.05.2025 US 202519213460
(71) Applicant: Google LLC, Mountain View, CA 94043 (US)
(72) Inventor: Zhang, Haoquan, Mountain View, California, 94043 (US); McCauley, Scott, Mountain View, California, 94043 (US); Lai, Weihsun, 231 New Taipei, Xindian District (TW); Gan, Houle, Mountain View, California, 94043 (US); Sizikov, Gregory, Mountain View, California, 94043 (US); Wen, Hao, Mountain View, California, 94043 (US); Chang, Chia-Hsi, 231 New Taipei, Xindian District (TW); Cheng, Ching-Hsiang, 231 New Taipei, Xindian District (TW)
(74) Representative: Betten & Resch

(57) **Abstract**

Systems and methods are disclosed for initiating and maintaining a rack-level throttling state for one or more processing units. The power throttling may be initiated in response to a transition from a main power source to a battery power source. The power throttling can be initiated on the order of nanoseconds based on identification of changes in a rack busbar voltage with respect to a programmable voltage detection threshold value. The processing units may also be released from the power throttling based on changes in the voltage with respect to a programmable power throttling release threshold. The system may also include deglitch circuitry for preventing rapid fluctuations between a normal-power mode of operation and a throttled low-power mode of operation.

## Description

### BACKGROUND

Processing units, such as CPUs, GPUs, and TPUs, can be configured to operate within a rack of devices. These racks can be powered by a main power source, such as an external AC power connection. However, in the event that the main power source is interrupted, the rack may include on-rack battery units that can be used to power the processing unit during the period in which the main power is interrupted. Currently available racks are not well suited to allow for efficient transition between main power and battery power. For example, when the processing units transition to battery power, they will often operate, for at least a period of time, in a manner that can cause brownouts or otherwise overtax the available battery power.

### BRIEF SUMMARY

What is needed are systems and methods whereby a rack of processing units can efficiently transition between a main power source and a backup power source without causing unwanted interruptions or faults by the processing units. In accordance with aspects of the disclosure, a power throttling mechanism, which can be referred to as a power brake, and which can be used to reduce the clock speed of the processing units, e.g., CPU, GPU or TPU, in response to a loss of a main power source. For example, in data centers, when a main power source (such as the A/C power source) that supplies power to a rack of equipment is lost, power is usually switched to and provided by in-rack battery backup units (BBUs). Upon detection of the loss of power from the main power source (mains for simplicity), the power brake feature is engaged to throttle rack power and maintain in-rack battery hold-up time requirements. In effect, the power brake feature reduces tray power consumption by slowing the clock supplied to the equipment or devices (e.g., GPUs, CPUs, TPUs) that populate the rack. This feature is typically toggled on/off by the logic status of a GPIO pin (LO/HI). It can be important for this pin to be toggled on/off at the correct timing for each tray.

Disclosed systems and methods herein can avoid instituting power brake detection mechanisms that are too rigid, have limited functionality, and are not always compatible with a given datacenter infrastructure. For example, busbar voltage threshold values for initiating and releasing the power brake can be programmably set, so that the power brake mechanism conforms to the system-specific requirements, such as the desired voltage levels during operation under main power and battery power. In addition, the current systems and methods allow for detection of voltage changes at a location on the rack that is close enough to the processing units that the power brake can be quickly asserted. Accordingly, the current systems and methods can prevent potential propagation delays that impact the timing of when power braking is applied and the performance of the devices housed within a rack. In addition, by allowing for a more efficient transition to battery power, new rack designs can be contemplated that have denser processing units and fewer battery backup units (BBUs), as well as potentially more manageable cabling between racks and more efficient maintenance routines.

Systems and methods are disclosed for initiating and maintaining a rack-level throttling state for one or more processing units. The power throttling may be initiated in response to a transition from a main power source to a battery power source. The power throttling can be initiated on the order of nanoseconds based on identification of changes in a rack busbar voltage with respect to a programmable voltage detection threshold value. The processing units may also be released from the power throttling based on changes in the voltage with respect to a programmable power throttling release threshold. The system may also include deglitch circuitry for preventing rapid fluctuations between a normal-power mode of operation and a throttled low-power mode of operation.

The disclosed technology in one form is a system that detects the transition to and from in-rack BBUs and triggers/releases rack-level power throttling in a more timely fashion. The system in effect synchronizes power brake throttling with battery transition. In one aspect, the disclosed invention provides a system that detects the transitions to and from the in-rack BBUs more quickly, e.g., on the order of nanoseconds as opposed to milliseconds. In another aspect, the disclosed technology provides a mechanism for detecting the transitions closer to the location of the equipment or devices, e.g., on each tray. Further, the disclosed technology provides programmable or tunable voltage levels for detecting the transition to and from the in-rack BBUs. In addition, the disclosed technology provides the ability to have two set points - one for the transition to the in-rack BBUs and another for the transition from the in-rack BBUs. The disclosed technology advantageously provides for compatibility with a variety of data center deployment configurations and can lead to more efficient use of physical space and cost savings.

In accordance with the disclosed technology, the system includes detection circuitry, a NOR gate type SR latch and a one-shot logic. The detection circuitry includes tunable voltage levels to detect the transition to and from the in-rack BBUs. These tunable voltage levels are compared to changes in the busbar voltage levels using comparators. The outputs of the comparators are used to provide release and set trigger signals to the NOR gate type SR latch. The NOR gate type SR latch provides an output to the one-shot logic that causes it to output a pulse approximately 250 ms in duration when a transition to the BBUs is detected. If the power brake disengages before 250 ms, it still won't get released until the 250 ms window expires.

In accordance with aspects of the disclosure, a power brake system may include: circuitry for detecting a busbar voltage associated with an equipment power rack; a NOR gate type set and reset latch ("NOR gate type SR latch") coupled to the circuitry via a reset input and a set input of the NOR gate type SR latch; and a one-shot logic coupled to an output of the NOR gate type SR latch. In addition, the circuitry may include at least one of a programmable set threshold or a programmable release threshold that respectively determine transition of a power rack to or from an AC power source and from or to an alternative power supply.

In other aspects of the disclosure, the circuitry may include both the programmable set threshold and the programmable release threshold.

In still other aspects of the disclosure the circuitry may include an electrical network having a plurality of resistors and capacitors that are coupled to the bus bar voltage. In addition, the electrical network may include a first capacitor coupled in parallel with a first resistor and a second capacitor coupled in parallel with the second resistor, the first resistor being coupled to an electrical potential of the bus bar and the second resistor being coupled to ground. The circuitry may also include a first comparator and a second comparator, the electrical network outputting a sensed voltage to a first input of the first comparator and a second input of the second comparator.

In yet other aspects of the disclosure, the first comparator may include a second input and the second comparator includes a first input and a first voltage difference between the first and second inputs of the first comparator determines when the circuitry outputs a release signal to the release input of the NOR gate type SR latch. In addition, a second voltage difference between the first and second inputs of the second comparator may determine when the circuitry outputs a set signal to the set input of the NOR gate type SR latch.

In other aspects of the disclosure, the one-shot logic operates to activate or deactivate power throttling of one or more devices associated with the equipment power rack based on the output of the NOR gate type SR latch in accordance with a programmable duration of time. The one-shot logic may also be configured to prevent deactivation of power throttling within 250ms of an activation of power throttling. In addition, power throttling may include reducing a clock speed associated with the one or more devices. The one or more devices may take the form of one or more CPUs, GPUs or TPUs.

In yet other aspects of the disclosure, the alternative power source is one or more in-rack battery backup units (BBUs).

In still other aspects of the disclosure, a method of power transition, may include: detecting a voltage corresponding to power for one or more processors; providing the voltage to a first comparator and a second comparator, wherein the first comparator compares the voltage with a programmable set threshold value and the second comparator compares the voltage with a programmable release threshold value; providing output of the first comparator and second comparator to a NOR gate type set and reset latch ("NOR gate type SR latch"); providing an output of the NOR gate type SR latch to a one-shot logic; and determining whether a power brake should be initiated or maintained based on the output of the one-shot logic.

In other aspects of the disclosure, the programmable set threshold value and the programmable release threshold value are provided by one or more programmable digital-to-analog converters.

In still other aspects of the disclosure, the one-shot logic provides an output in accordance with a programmable duration of time having passed since initiating a most recent power brake.

In other aspects of the disclosure, the voltage transitions from being provided by a main power source to a battery backup power source, and wherein determining whether a power brake should be initiated occurs in less than 3ms of the voltage transitioning.

The digital-to-analog converter may have voltage thresholds programmable through common communication busses (e.g., a I2C bus). In addition, the tray may have board management controllers (e.g. BMCs) that serve as a master over the communication bus, and can dynamically adjust the voltage thresholds to assert/release the throttling, or to adapt to new rack designs.

### BRIEF DESCRIPTION OF THE DRAWINGS

Figure 1 is a block diagram of a rack of processors in accordance with aspects of the disclosure.
Figure 2 is a block diagram of circuitry for initiating and maintaining a power brake in accordance with aspects of the disclosure.
Figure 3 are graphical diagrams for a deglitch filter in accordance with aspects of the disclosure.
Figure 4 are graphical diagrams of current and voltage values for one or more processors in accordance with aspects of the disclosure.
Figure 5 is a flow diagram of operations in accordance with aspects of the disclosure.

### DETAILED DESCRIPTION

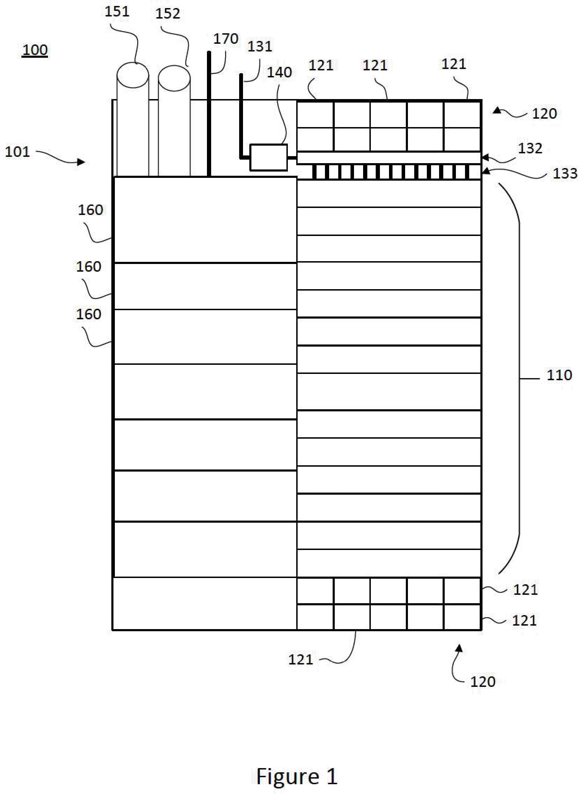

Figure 1 is a block diagram 100 of a system 101 that is configured to operate as a rack of high-bandwidth processing units. The system 101 may include a rack of GPUs 110, which can be powered by either an external power source (not shown) via power input 131 or by one or more sets 120 of battery backup units 121. The power from power input 131 and from battery backup units 121 can be provided to each of the GPUs 110 via a power bus bar 132. For example, power bus bar 132 may have a plurality of output connections 133, and each output connection 133 may be electrically connected or otherwise operably coupled to each of the GPUs 110.

System 101 may also include other components for processing and transmitting data. For example, components 160 may include additional processing units, and data connection 170 may be configured to transmit data to and from the system 101, including data that is provided to or transmitted from GPUs 110. System 101 may also include components that are configured to maintain efficient operation of the GPUs 110 and other components within system 101. For example, coolant intake 151 and coolant output 152 can be configured to maintain a flow of coolant throughout portions of system 101, so as to maintain a desired temperature for GPUs 110 and other components.

GPUs 110 may typically operate using power that is provided by power input 131. However, if an interruption occurs for power input 131, system 101 may be configured to switch from the external power source to the battery backup units 121. The controller may be configured to identify a power interruption or other anomaly within the power input 131 and provide a signal to initiate battery backup power. In this instance, power bus bar 132 can transition from providing power to GPUs 110 via power input 131 to providing power from battery backup units 121.

The power input 131 can, for example, take the form of an AC power source. In addition, this AC power source can produce a somewhat higher voltage over power bus bar 132 than the voltage that is produced by battery backup units 121.

In accordance with aspects of the disclosure, system 101 may include a power management detection mechanism that is configured to detect the transition to and from the battery backup units 121 and engages a power throttle function to throttle the GPUs 110 in a manner that allows for the GPUs 110 to maintain desired functionality during transitions between external power and power from battery backup units 121. For example, given the restraints for space within a given rack, the number of battery backup units 121 may require the GPUs 110 to operate under low-power constraints while drawing power from battery backup units 121. If GPUs 110 are not quickly throttled when the system switches to the battery backup units 121, it can result in the GPUs 110 experiencing brown-outs or other faults. The power throttle function, once initiated, can reduce the power being consumed by GPUs 110 by, for example, slowing the clocks of GPUs 110.

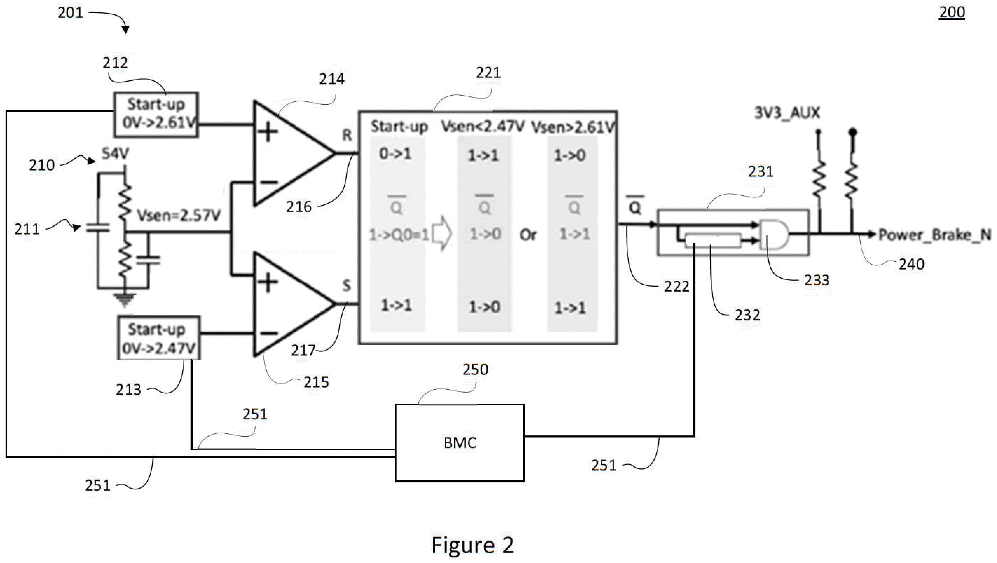

Figure 2 is a block diagram 200 of circuitry 201 that is configured to determine when at least a portion of the system is to enter into or be released from a power throttling mode of operation. Circuitry 201 can be incorporated into the power input of a GPU or within the power output of a power bus bar, so as to allow for efficient transition to a power throttling mode of operation. For example, circuitry 201 contains a power input 210, which can come directly from a connection with a power bus bar (not shown). This power input 210 can be provided to voltage dividing circuitry 211, which divides, or otherwise reduces, the voltage that is to be provided to comparators 214 and 215. For example, as shown in block diagram 200, power input 210 is receiving a voltage of 54V, and the resistors and capacitors of voltage divider 211 are configured so that the output of voltage divider 211 is 2.57V.

The output of voltage divider 211 is provided as input to comparators 215 and 216. In addition, comparators 215 and 216 may each receive an input from a digital-to-analog converter (DAC), which are configured to be programmably set to provide a desired voltage. For example, DAC 213 is programmed to provide a voltage of 2.47V. This voltage corresponds to what voltage divider 211 would output when receiving an input voltage of 52V. Comparator 215 is configured to determine whether the output of voltage divider 211 is less than the voltage received by DAC 213. Comparator 215 can then provide a comparator output signal 217 that indicates whether the output of voltage divider 211 is less than the voltage received by DAC 213. For example, comparator 215 can output a "1" if the output of voltage divider 211 is less than the voltage received by DAC 213, and comparator 215 can output a "0" if the output of voltage divider 211 is not less than the voltage received by DAC 213. Accordingly, comparator 215 can be configured to determine whether the voltage being received from the power bus bar is below some programmably set threshold value.

Comparator 214 is configured to determine if the output of voltage divider 211 is more than a programmed release threshold value that is provided by DAC 212 and provide an output indicating this determination. The comparator output signal 216 of comparator 214 can be used to determine when the system should be released from a throttled mode of operation. For example, if the system is currently operating in a throttled mode of operation, the system will not be released from that mode of operation until it is determined that the output of voltage divider 211 is above the release threshold value that DAC 212 has been programmed to output.

As shown in block diagram 200, voltage divider 211 is currently outputting a voltage of 2.57V, while DAC 213 is programmed to provide a voltage of 2.47V, and DAC 212 is programmed to provide a voltage of 2.61V. Accordingly, comparator 215 will provide an output indicating that the divided voltage received via power input 210 is not below the throttle threshold value established by DAC 213, and comparator 214 will provide an output indicating that the divided voltage received via power input 210 is not above the release threshold value established by DAC 212.

The outputs of comparators 214 and 215 are provided to set-release latch 221, which can be configured to identify whether the system should transition to or from a throttled mode of operation. For example, set-release latch 221 can take the form of a NOR gate type set-release latch that identifies when comparator 215 has provided an output indicating that received voltage for the system has dropped below the throttle threshold value set by DAC 213. If the system was previously within a standard power mode of operation, receiving this signal from comparator 215 will cause set-release latch 221 to provide a latch signal 222 indicating that the system should enter a throttled mode of operation. Set-release latch 221 will then continue to provide an output indicating that the system is to operate in a throttled-power mode until set-release latch 221 receives a signal from comparator 214 indicating that the system voltage has exceeded the release threshold. Once comparator 214 indicates that the system voltage has exceeded the release threshold, set-release latch 221 can provide a latch signal 222 indicating that the system should be released from the throttled-power mode. For example, set-release latch 221 could be configured to output a "1" in instances in which it is determined that the system is to initiate and maintain a throttled-power mode of operation, and set-release latch 221 could be configured to output a "0" in instances in which the system is to deactivate and be released from a throttled-power mode of operation.

In accordance with aspects of the disclosure, circuitry 201 may also include a deglitch filter 231, which is configured to prevent the system from rapid fluctuations back and forth between throttled-power and non-throttled-power modes of operation. Deglitch filter 231 may include a one-shot logic 232, which is configured to output a signal for some programmable period of time upon the system transitioning between a throttled-power mode of operation. The AND gate 233 can receive outputs from both the set-release latch 221 and the one-shot logic 232 and only transition from a throttled-power mode of operation when both signals indicate that a transition can be made. The output of deglitch filter 231 can be transmitted as output 240 and provided to other components of the GPU so as to initiate, maintain, or release the system from a throttled low-power mode. For example, output 240 can be transmitted to one or more components that are responsible for setting the clocking speed for the GPU unit. Accordingly, output 240 can result in the clocking speed of the GPU being reduced in response to a signal for initiating a throttled mode of operation, and the clocking speed of the GPU can be released from the throttled mode of operation in response to a release signal via output 240.

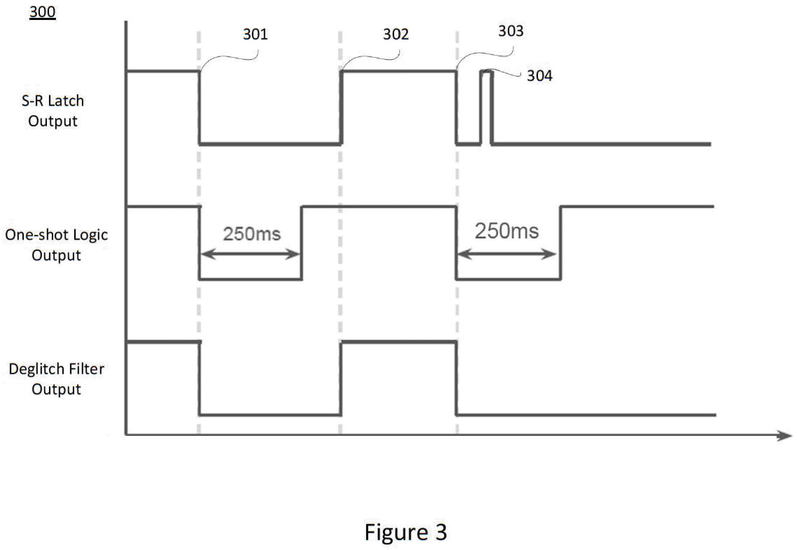

Figure 3 is a graphic diagram 300 of potential outputs of a set-release latch, the one-shot logic, and the deglitch filter over a period of time. In this example, the one-shot logic is configured to provide a signal for 250ms in response to a transition in the signal of the set-release latch to what would indicate a throttled-power mode of operation. As shown in graphic diagram 300, the set-release latch provides an output at time 301 indicating a transition is to be made to a throttled-power mode. In response to the transition of the set-release latch output at time 301, the one-shot logic also outputs a signal for the predetermined period of time of 250ms, and the deglitch filter outputs a signal indicating that the system is to enter a throttled-power mode. The deglitch filter continues to provide the throttled-power mode signal until both the set-release latch output and the one-shot logic output indicates that the system can be released from the throttled-power mode at time 302. The system again enters a throttled-power mode at time 303 based on the output of the set-release latch and the one-shot logic. Although there is a brief transition at time 304 within the set-release latch output, this does not result in a transition of the deglitch filter output, as the one-shot logic is still providing its non-release output within the 250ms period of the previous transition.

Returning to Figure 2, the one-shot logic 232 of deglitch filter 231 can be programmed to provide a non-release output signal for any desired length of time. This length of time can be configured in accordance with system specifications, including hardware requirements that would prevent the GPU or other components from transitioning into and out of a throttled-power mode within a given period of time.

In accordance with aspects of the disclosure, components of circuitry 201 can be controlled by a controller, such as baseboard management controller (BMC) 250. For example, the output voltage of DACs 212 and 213 can be programmably set by BMC 250, so as to provide the desired set and release threshold values for the circuitry 201. In addition, the delay period for one-shot logic 232 can be controlled by BMC 250. The signals from BMC 250 can be provided to these components via one or more connections, such as electrical connections 251. DACs 212 and 213 may also have voltage thresholds programmable through common communication busses (e.g., a 12C bus).

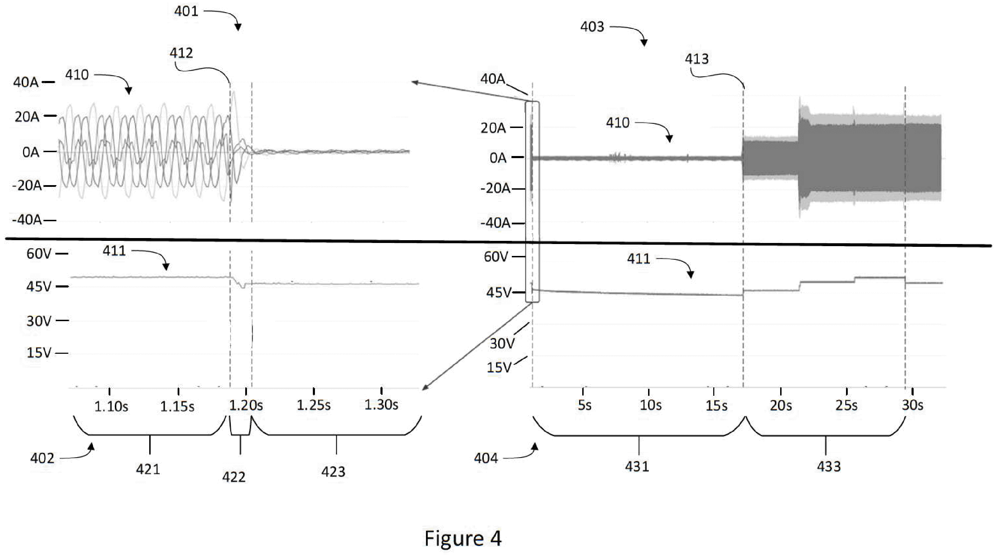

Using the circuitry 201 of block diagram 200, the system is capable of triggering a lowlatency power brake that is highly responsive to changes in voltage being received by one or more GPUs. In particular, the circuitry described herein is capable of instituting a power brake on the order of nanoseconds. This power brake can serve as a hardware slowdown mechanism that allows the one or more GPUs to continue operation without causing brown-outs, or other power-induced interruptions, within the system. Figure 4 includes graphs 401-404, which provide an example of the timing involved for transitions between an external power source and a battery backup. Graph 401 contains a graph of current values 410, which represent the current, in amps, that is being provided to one or more GPUs by an external power source over a period of about 0.3s. Graph 402 provides a voltage value 411, which represents the voltage that is being provided to the one or more GPUs over a power bus bar during the same period of time as graph 401.

Graphs 401 and 402 have been divided into three different periods of time 421-423. During period 421, the system is receiving power from the external power source, as represented by the current values 410 shown within graph 401 and the voltage values 411 of graph 402. However, starting at time 412, an interruption in external power can be detected, as the current values 410 begin to fluctuate from the standard AC current of period 421. In addition, a drop in voltage values 411 can be detected after time 412.

During period 422, the interruption of external AC voltage will cause the voltage values 411 to drop, upon which the system transitions to battery backup power. As seen by voltage values 411 within period 422, the drop in voltage prior to battery backup being initiated is relatively brief and results in a relatively small reduction in voltage. Within period 423, the voltage values 411 are the result of the voltage that is being provided by battery backup units. In order to allow for a successful transition to battery backup power, the GPUs within the system can be throttled to a lower power mode of operation. For example, during period 422, a power brake in accordance with the current disclosure can be implemented, so as to prevent brownouts from occurring within the system and to prevent the battery backup units from being otherwise overtaxed as they continue to provide power within period 423.

The power brake disclosed herein allows for the system to be highly responsive to the transition from external AC power to battery backup power that occurs within period 422 of graphs 401 and 402. Part of this responsiveness is achieved by the programmability of the power brake systems disclosed herein. For example, returning to block diagram 200 of Figure 2, comparators 214 and 215 of circuitry 201 can be programmably set in accordance with the voltage requirements of the system. In particular, DAC 213 can be programmed to provide comparator 215 with a set voltage that will allow the power brake to be initiated in response to the voltage levels that will result from the transition to battery backup power, such as the voltage levels 411 shown in period 422 of graph 402. In addition, the circuitry for the disclosed power brake is configured so as to allow the power brake to be initiated within 3ms of the voltage drop being detected, thereby preventing interruptions in GPU processing during the transition to battery backup power.

The systems disclosed herein are also responsive to system-specific requirements for releasing the power brake when external power has been sufficiently restored. Graphs 403 and 404 of Figure 4 provide a time scale of about 30s, which begins at the .3s of time shown in graphs 401 and 402. During period 431 of graphs 403 and 404, AC power is not being provided and the voltage values 411 are the product of battery backup units. During this period of time the system will be maintained in a throttled low-power mode of operation. However, at time 413, external AC power begins to be restored, as can be seen from current values 410 during period 433 of graph 403. As the external AC power is restored, the voltage on the power bus bar increases, as can be seen by voltage values 411 during period 433 of graph 404. In accordance with aspects of the disclosure, the circuitry for establishing the throttled low-power mode of operation can be released based on a desired threshold voltage, which can be programmably set within the system based on current system requirements. Accordingly, the system can be configured so that the throttled low-power mode of operation is maintained during the initial voltage increases within period 433, and only after the voltage values 411 reach a desired threshold voltage will the system be released from the low-power mode.

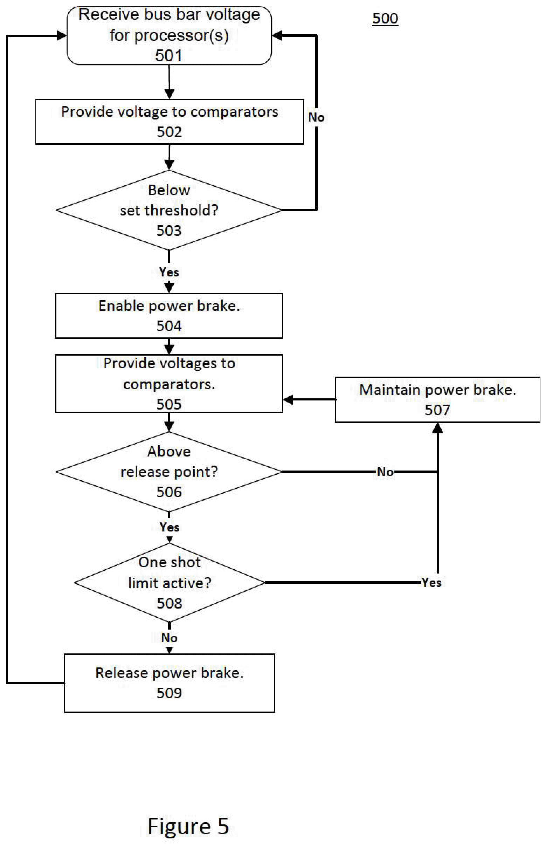

Figure 5 is a flow diagram 500 in accordance with aspects of the disclosure. Operations of flow diagram 500 may be performed by one or more components of the systems described herein. While flow diagram 500 contains a particular set of operations, one or more operations may be removed or added without deviating from aspects of the disclosure. In addition, operations may be performed in varying orders, including simultaneously within aspects of the disclosure.

In block 501, the system is operating under a normal mode of operation, and bus bar voltage for the system is received during this normal mode of operation. The bus bar voltage can be a voltage that is being provided to one or more processors, such as one or more GPUs. In block 502, a voltage is provided to comparators. As disclosed herein, the voltage provided to the comparators may be a divided voltage or some other signal that corresponds to the voltage that was received in block 501. In block 503, the system can determine whether the provided voltage of block 502 is below a particular threshold value. As discussed herein, this threshold value can be programmably set, such as by programming a DAC to provide the desired threshold value. If the provided voltage is not below the set threshold value, the system can return to block 501, wherein voltage values can be continually received and identified.

If the provided voltage of block 502 is below the set threshold value, the system can enable a power brake, whereby one or more processors enter a throttled low-power mode of operation (block 504). This throttled low-power mode of operation can include reducing the clocking speed of the one or more processors. As disclosed herein, the system can be configured to enter a throttled low-power mode of operation within 3ms of receiving a voltage that is below the set threshold. Once the system is in the throttled low-power mode of operation, the system may continue to provide voltages to the comparators based on continued voltages that are received over the bus bar (block 505).

In block 506, it is determined whether the voltages of block 505 are above a release point threshold. As discussed herein, the release point threshold can be programmably set based on controlling the output of a DAC, and this release point can be set in accordance with system requirements. If the voltages of block 505 are not above the release point threshold, the system can maintain the power brake, so as to remain in the throttled low-power mode of operation (block 507). The system will then continue to provide voltages to the comparators (block 505). However, if the voltages are determined to be above the release point (block 506) and a one-shot limit is not active (block 508), the power brake can be released (block 509), whereupon the system can return to a standard-power mode of operation. For example, the clocking speed of the one or more processors may be increased by removing the throttle limitations. As discussed herein, the one-shot limit of block 508 may be programmably set to a desired period of time, so as to prevent the system from transitioning out of the power brake too quickly. Accordingly, if the one-shot limit is found to be active in block 508, the system will maintain the power brake (block 507). Once the power brake is released (block 509), the system can return to block 501, whereupon bus bar voltage values continue to be received under a normal mode of operation.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A rack-level power throttling actuation system, comprising:
circuitry for detecting a busbar voltage associated with an equipment power rack;
a NOR gate type set and reset latch ("NOR gate type SR latch") coupled to the circuitry via a reset input and a set input of the NOR gate type SR latch; and
a one-shot logic coupled to an output of the NOR gate type SR latch, and
wherein the circuitry includes at least one of a programmable set threshold or a programmable release threshold that respectively determine transition of a power rack to or from an AC power source and from or to an alternative power supply.

2. The system of claim 1, wherein the circuitry includes both the programmable set threshold and the programmable release threshold; and/or
wherein the alternative power source is one or more in-rack battery backup units (BBUs).

3. The system of claim 1 or claim 2, wherein the circuitry comprises an electrical network having a plurality of resistors and capacitors that are coupled to the bus bar voltage.

4. The system of claim 3, wherein the electrical network comprises a first capacitor coupled in parallel with a first resistor and a second capacitor coupled in parallel with the second resistor, the first resistor being coupled to an electrical potential of the bus bar and the second resistor being coupled to ground.

5. The system of claim 4, wherein the circuitry comprises a first comparator and a second comparator, the electrical network outputting a sensed voltage to a first input of the first comparator and a second input of the second comparator.

6. The system of claim 5, wherein the first comparator includes a second input and the second comparator includes a first input and a first voltage difference between the first and second inputs of the first comparator determines when the circuitry outputs a release signal to the release input of the NOR gate type SR latch.

7. The system of claim 6, wherein a second voltage difference between the first and second inputs of the second comparator determines when the circuitry outputs a set signal to the set input of the NOR gate type SR latch.

8. The system of one of claims 1 to 7, wherein the one-shot logic operates to activate or deactivate power throttling of one or more devices associated with the equipment power rack based on the output of the NOR gate type SR latch in accordance with a programmable duration of time.

9. The system of claim 8, the one-shot logic is configured to prevent deactivation of power throttling within 250ms of an activation of power throttling.

10. The system of claim 8 or claim 9, wherein power throttling comprises reducing a clock speed associated with the one or more devices; and
optionally wherein the one or more devices comprises one or more CPUs, GPUs or TPUs.

11. A method of power transition, comprising:
detecting a voltage corresponding to power for one or more processors;
providing the voltage to a first comparator and a second comparator, wherein the first comparator compares the voltage with a programmable set threshold value and the second comparator compares the voltage with a programmable release threshold value;
providing output of the first comparator and second comparator to a NOR gate type set and reset latch ("NOR gate type SR latch");
providing an output of the NOR gate type SR latch to a one-shot logic; and
determining whether power throttling should be initiated or maintained based on the output of the one-shot logic.

12. The method of claim 11, wherein the programmable set threshold value and the programmable release threshold value are provided by one or more programmable digital-to-analog converters.

13. The method of claim 11 or claim 12, wherein the one-shot logic provides an output in accordance with a programmable duration of time having passed since initiating a most recent power brake.

14. The method of claim 13, wherein the one-shot logic is configured to maintain the power brake for at least 250ms.

15. The method of one of claims 11 to 14, wherein initiating the power brake comprises reducing the clock speed associated with the one or more processors; and/or
wherein the one or more processors comprise one or more CPUs, GPUs or TPUs; and/or
wherein the voltage transitions from being provided by an external power source to a battery backup power source, and wherein determining whether a power brake should be initiated occurs within 10ms of the voltage transitioning; and/or
wherein the voltage corresponding to power for one or more processors is a divided voltage relative to a received voltage from a bus bar.
